# EUROPÄISCHE PATENTSCHRIFT

(11) **EP 3 474 424 B1**
(45) Veröffentlichungstag und Bekanntmachung des Hinweises auf die Patenterteilung: **09.09.2020**
(21) Anmeldenummer: 18186302.8
(22) Anmeldetag: 30.07.2018
(51) Int. Cl.: H02K 9/19, H02K 11/40, H02K 5/20, H02K 1/32

(54) **ELEKTRISCHE MASCHINE UND KRAFTFAHRZEUG**
ELECTRICAL MACHINE AND MOTOR VEHICLE
MACHINE ÉLECTRIQUE ET VÉHICULE AUTOMOBILE

(30) Priorität: 23.10.2017 DE 102017218865
(43) Veröffentlichungstag der Anmeldung: 24.04.2019
(73) Patentinhaber: AUDI AG, 85045 Ingolstadt (DE)
(72) Erfinder: Sorge, Martin, 85055 Ingolstadt (DE); Heidler, Bastian, 85402 Kranzberg (DE)

(56) Entgegenhaltungen:
- EP-A1- 1 705 778
- WO-A1-2016/039258
- DE-A1- 4 420 250
- DE-A1-102004 050 134
- DE-A1-102009 036 856
- DE-A1-102010 062 790
- DE-A1-102015 218 519
- US-A1- 2003 015 926
- US-A1- 2014 015 351
- US-A1- 2017 063 200

## Beschreibung

Die Erfindung betrifft eine elektrische Maschine umfassend eine Welle sowie ein Kühlsystem, welches wenigstens einen von wenigstens einer Komponente der elektrischen Maschine gebildeten Kühlkanal umfasst, wobei das Kühlsystem mit einem elektrisch leitfähigen Kühlmittel gefüllt ist. Weiterhin betrifft die Erfindung ein Kraftfahrzeug.

Zur Abfuhr von im Betrieb entstehender Wärme können elektrische Maschinen wie Motoren und/oder Generatoren mit einem Kühlmittel gefüllte Kühlsysteme aufweisen, wobei eine Wärmeabfuhr beispielsweise durch ein Zirkulieren des Kühlmittels erreicht werden kann.

Derartige elektrische Maschinen sind aus dem Stand der Technik bekannt.

So beschreibt die WO 2014/011 511 A2 eine elektrische Maschine, welche von einer leitfähigen Kühlflüssigkeit gekühlt wird, wobei die Kühlflüssigkeit durch eine Kühlkanalanordnung strömt, welche in direktem Kontakt mit Statorwindungen der elektrischen Maschine angeordnet ist. Das die Kühlkanäle aufweisende Bauteil ist dabei zwischen den Statorwindungen und dem zugehörigen Statorjoch angeordnet. Zwischen dem die Kühlkanäle aufweisenden Bauteil und der Statorwicklung befinden sich ein Spalt oder eine Isolationsschicht, um das Auftreten von Wirbelströmen zu verhindern.

EP 2 852 030 A1 beschreibt eine Kühlvorrichtung für eine elektrische Maschine mit einem Stator, welcher mindestens eine Statorwicklung und mindestens ein Statorblechpaket mit mindestens einem Statorwicklungskopf umfasst, wobei die Kühlvorrichtung, welche eine Vielzahl von mit einem Kühlmittel durchströmbaren Kanälen umfasst, die an einem ersten Endabschnitt mit einem Druckspeicher verbunden sind und an ihrem zweiten Endabschnitt mit einer Prallkühlplatte des Statorwicklungskopfes enden. Dabei ist sicherzustellen, dass bei einem leitfähigen Kühlmittel kein Kurzschluss zwischen elektrisch leitenden Komponenten der elektrischen Maschine entsteht.

In DE 10 2015 218 519 A1 wird eine elektrische Maschine beschrieben, welche eine als Hohlwelle ausgebildete Rotorwelle umfasst, die drehbar in einem Gehäuse der elektrischen Maschine angeordnet ist. Im Inneren der Rotorwelle ist ein ortsfest am Gehäuse angeordnetes Rohr eingebracht, welches von einem thermisch leitfähigen Kühlfluid durchflossen wird. Der zwischen der Außenwand des Rohrs und der Innenwand der hohlen Rotorwelle ausgebildete, abgeschlossene Hohlraum ist zumindest teilweise mit einem thermisch und elektrisch leitfähigen Fluid und/oder Feststoff gefüllt. Über den in den Hohlraum eingebrachten Stoff und das elektrisch leitfähige Rohr werden eine Wärmeabgabe an das Kühlfluid und eine Erdung des Rotors beziehungsweise der Rotorwelle erreicht.

DE 10 2010 062 790 A1 beschreibt einen Elektromotor zur Verwendung in einer Pumpe. Der Elektromotor umfasst ein leitfähiges Gehäuse zum Aufnehmen eines Läufers, Anschlüsse zum Erhalten eines hohen und eines niedrigen Versorgungspotentials einer Versorgungsgleichspannung sowie eine Spulenwicklung, die über den Gleichspannungsanschluss mit einem Versorgungspotential versorgt wird. Dabei ist das Polgehäuse mit einem Potential verbunden, das größer als das niedrigste Potential bzw. das Massepotential der Versorgungsspannung ist.

Aus DE 10 2004 050 134 A1 ist eine elektrische Drehmaschine bekannt, welche ein Gehäuse, einen Stator, einen Rotor und ein Öl umfasst. Das Öl wird dabei in einem unteren Teil des Gehäuses gespeichert und umfasst ein elektrisch leitfähiges Material, um Entladungen, die durch den Unterschied der dielektrischen Konstante zwischen dem Öl und einem dem Stator überziehenden Isoliermaterial bewirkt werden, zu reduzieren.

Weiterhin ist allgemein bekannt, dass eine gegebenenfalls erforderliche Wellenerdung zur Erdung der Welle der elektrischen Maschine durch einen elektrischen Kontakt an der Welle beispielsweise über einen Schleifkontakt, realisiert werden kann. Eine derartige Wellenerdung dient beispielsweise der elektromagnetischen Verträglichkeit der elektrischen Maschine und zur Reduktion von Lagerströmen, welche einen erhöhten Verschleiß der Wellenlager der elektrischen Maschine mit sich führen können.

Der Erfindung liegt daher die Aufgabe zugrunde, eine elektrische Maschine mit einer verbesserten Wellenerdung anzugeben.

Zur Lösung dieser Aufgabe ist erfindungsgemäß vorgesehen, dass die Welle im elektrischen Kontakt mit dem Kühlmittel steht und über das Kühlmittel geerdet ist.

Die Erfindung bietet den Vorteil, dass keine zusätzlichen Bauteile zur Wellenerdung erforderlich sind. Dadurch wird der Aufbau der elektrischen Maschine vereinfacht und der Einsatz von Bauteilen, wie Schleifkontakten, welche einem mechanischen Verschleiß unterliegen, wird vermieden. Der erfindungsgemäß vorgesehene elektrische Kontakt zwischen der Welle und dem leitfähigen Kühlmittel kann beispielsweise durch einen direkten Kontakt der Welle mit dem Kühlmittel erfolgen. Über das elektrisch leitfähige Kühlmittel ist die Welle sodann elektrisch leitfähig mit einem Massepotential verbunden, wodurch eine Erdung der Welle erzielt wird. Die Leitfähigkeit des Kühlmittels ist dabei derart zu wählen, dass sich aufgrund des Betriebes der elektrischen Maschine an der Welle kumulierende elektrische Ladungen zumindest teilweise über das elektrisch leitfähige Kühlmittel abfließen, bevor sich auf der Welle eine Gesamtladung in Höhe einer Grenzladung bilden kann. Auf diese Weise wird erreicht, dass die Gesamtladung auf der Welle stets unterhalb der Grenzladung bleibt, wobei die Grenzladung diejenige Ladung auf der Welle beschreiben kann, ab der ein Abfließen der Ladung über wenigstens ein Wellenlager, in der die Welle gelagert ist, erfolgt. Zusätzlich oder alternativ dazu kann die Grenzladung auch so gewählt werden, dass eine Störung aufgrund von der Ladung ausgehenden elektrischen Feldern, beispielsweise eine Störung eines AM-Radioempfangs, aufgrund der Erdung der Welle über das elektrisch leitfähige Kühlmittel unterbleibt.

Für das sich in dem Kühlsystem befindende Kühlmittel ist erfindungsgemäß vorgesehen, dass es durch das Kühlsystem zirkuliert, so dass neben der Wellenerdung auch eine effiziente Aufnahme von Wärme sowie ein Abtransport von erwärmtem Kühlmittel möglich sind.

In einer bevorzugten Ausgestaltung der elektrischen Maschine kann vorgesehen sein, dass das Innere der elektrischen Maschine von dem Kühlmittel durchströmt und/oder dass die Welle einen in ihrem Inneren verlaufenden, mit dem Kühlsystem kommunizierenden und mit dem Kühlmittel gefüllten Wellenkühlkanal aufweist. Das Innere der elektrischen Maschine kann dabei den Raum umfassen, in dem sich ein Stator und ein an der Welle der elektrischen Maschine angeordneter Rotor befinden. In diesem Fall ist es erforderlich, dass eine Isolierung zwischen dem elektrisch leitfähigen Kühlmittel und dem Rotor bzw. dem Stator erfolgt, um einen elektrischen Kurzschluss im Inneren der elektrischen Maschine zu vermeiden. Das elektrisch leitfähige Kühlmittel kann in diesem Fall jedoch die Welle zumindest teilweise umströmen, so dass ein elektrischer Kontakt zwischen der Welle und dem elektrisch leitfähigen Kühlmittel zur Erdung der Welle gegeben ist. Zusätzlich oder alternativ dazu kann die Welle einen in ihrem Inneren verlaufenden, mit dem Kühlsystem kommunizierenden und mit dem Kühlmittel gefüllten Wellenkühlkanal aufweisen. Dieser kann beispielsweise mit einem von dem elektrisch leitfähigen Kühlmittel durchströmten Inneren der Maschine verbunden sein, so dass über den im Inneren der Welle verlaufenden Wellenkühlkanal ebenfalls ein direkter Kontakt zwischen der Welle und dem sich im Wellenkühlkanal befindenden Kühlmittel erzeugt wird. Es ist auch möglich, insbesondere bei einer elektrischen Maschine, deren Inneres nicht mit dem Kühlmittel gefüllt ist, dass der Wellenkühlkanal mit dem Kühlsystem der elektrischen Maschine derart kommuniziert, dass über das Kühlsystem eine Zufuhr bzw. Abfuhr des sich im Inneren des Wellenkühlkanals befindenden Kühlmittels ermöglicht wird. Auch in diesem Fall wird eine Erdung der Welle über den Kontakt der Welle zu dem im Inneren des Wellenkühlkanals ruhenden oder strömenden Kühlmittel erreicht.

Zur Erdung des Kühlmittels kann erfindungsgemäß vorgesehen sein, dass das Kühlmittel in Kontakt mit wenigstens einem leitfähigen Wandabschnitt wenigstens eines Kühlkanals des Kühlsystems steht, wobei der leitfähige Wandabschnitt mit einem Massepotential elektrisch verbunden ist und/oder dass das Kühlmittel in Kontakt mit wenigstens einer mit einem Massepotential elektrisch verbundenen Elektrode steht. Beispielsweise können im Inneren wenigstens eines Kühlkanals einer oder mehrere Wandabschnitte des Kühlkanals aus einem leitfähigen Material, beispielsweise einem Metall, vorgesehen sein, welche in einem direkten Kontakt zu dem elektrisch leitfähigen Kühlmittel stehen. Durch eine Verbindung des oder der Wandabschnitte mit einem Massepotential kann eine Erdung des sich im Inneren der Kühlkanäle befindenden Kühlmittels erreicht werden. Zusätzlich oder alternativ dazu kann wenigstens eine Elektrode vorgesehen sein, welche derart angeordnet ist, dass sie ins Innere des Kühlsystems bzw. in das Innere wenigstens eines Kühlkanales hineinragt, so dass das Kühlmittel in direktem Kontakt mit der Elektrode steht. Durch einen Anschluss der Elektrode an ein Massepotential kann das Kühlmittel geerdet werden.

Für das Kühlmittel kann erfindungsgemäß vorgesehen sein, dass es eine Flüssigkeit oder ein Flüssigkeitsgemisch ist. Bei dem Kühlmittel kann es sich beispielsweise um eine Flüssigkeit wie Wasser oder Öl handeln oder es kann ein Flüssigkeitsgemisch verwendet werden, beispielsweise ein Wasser-Glykol-Gemisch. Insbesondere kann für das Kühlmittel vorgesehen sein, dass es derart beschaffen ist, dass es eine Leitfähigkeit aufweist, aufgrund derer sich ein Gesamtwiderstand zwischen Welle und Erdung ergibt, welcher kleiner als 1 Ohm ist. Der Gesamtwiderstand zwischen Welle und Erdung kann beispielsweise einen Gesamtwiderstand zwischen Welle und einem geerdeten, also auf Massepotential liegenden, Gehäuse der elektrischen Maschine beschreiben, wobei insbesondere die von der Beschaffenheit des Kühlmittels abhängigen Übergangswiderstände zwischen der Welle und dem Kühlmittel bzw. zwischen dem Kühlmittel und einem leitfähigen Wandabschnitt und/oder einer Elektrode ebenso mit zu berücksichtigen sind wie die Abmessungen und/oder die Geometrie der elektrischen Maschine. Mit einem derartigen Gesamtwiderstand wird eine besonders effiziente Abfuhr von sich auf der Motorwelle kumulierenden elektrischen Ladungen, mithin also eine besonders effiziente Erdung der Welle, ermöglicht.

Weiterhin kann vorgesehen sein, dass der Flüssigkeit oder dem Flüssigkeitsgemisch ein die elektrische Leitfähigkeit erhöhendes Additiv zugesetzt ist. Durch Zusetzen dieses Additivs kann die elektrische Leitfähigkeit des Kühlmittels über den Wert der elektrischen Leitfähigkeit gehoben werden, welche die Flüssigkeit bzw. das Flüssigkeitsgemisch ohne das Additiv aufweisen würde. Bei dem Additiv kann es sich beispielsweise um einen Feststoff handeln, welcher in dem Kühlmittel gelöst ist und auf diese Weise, beispielsweise durch die Ausbildung von Ionen oder geladenen Molekülen, die Leitfähigkeit des Kühlmittels erhöht. Zusätzlich oder alternativ dazu können auch Additive verwendet werden, welche selbst eine Flüssigkeit sind und die sich derart mit dem Kühlmittel vermischen, dass die elektrische Leitfähigkeit des Kühlmittels durch das Additiv erhöht wird. So ist beispielsweise der Zusatz von Säuren, Basen, Salzen und/oder anderen löslichen Feststoffen denkbar, welche nach Auflösung bzw. Vermischung mit dem Kühlmittel dessen Leitfähigkeit derart erhöhen, dass eine Erdung der Welle über das Kühlmittel ermöglicht wird.

Erfindungsgemäß ist vorgesehen, dass die elektrische Maschine ein Gehäuse umfasst, wobei das Gehäuse wenigstens einen mit dem Kühlsystem kommunizierenden Anschluss aufweist, mit dem das Kühlsystem an einen Kühlkreislauf angeschlossen oder anschließbar ist. Über den wenigstens einen, mit dem Kühlsystem kommunizierenden Anschluss ist dem Kühlsystem somit durch einen Kühlkreislauf das Kühlmittel zuführbar, eine Rückführung des zugeführten Kühlmittels kann beispielsweise über einen Ablauf in einem Kühlmittelsumpf der elektrischen Maschine erfolgen oder über einen weiteren mit dem Kühlsystem kommunizierenden Anschluss. Der weitere Anschluss kann dabei insbesondere derart angeordnet sein, dass ein einem ersten Anschluss zugeführtes Kühlmittel das gesamte Kühlsystem durchströmen kann, bevor es das Kühlsystem durch den weiteren Anschluss wieder verlässt.

Für ein erfindungsgemäßes Kraftfahrzeug ist vorgesehen, dass es wenigstens eine erfindungsgemäße elektrische Maschine umfasst. Bei der elektrischen Maschine kann es sich beispielsweise um einen Traktionsmotor des Kraftfahrzeugs oder um einen Generator zur Stromerzeugung, beispielsweise zur Rückgewinnung von Bremsenergie, handeln. Ein Anschluss des Kühlsystems der wenigstens einen elektrischen Maschine kann dabei beispielsweise an einen Getriebekühlkreislauf des Kraftfahrzeugs oder an einen Kühlkreislauf eines zusätzlich im Kraftfahrzeug vorhandenen Verbrennungsmotors erfolgen. Alternativ kann der Kühlkreislauf der elektrischen Maschine auch an einen eigenen Kühlkreislauf angeschlossen werden, welcher beispielsweise eine Pumpe und einen Wärmetauscher umfasst, welche über Kühlmittelleitungen untereinander und mit der elektrischen Maschine zur Zirkulation des Kühlmittels verbunden sind.

Weitere Vorteile und Einzelheiten ergeben sich aus den im Folgenden beschriebenen Ausführungsbeispielen sowie anhand der Zeichnungen. Dabei zeigen:
- Fig. 1: eine geschnittene Prinzipdarstellung einer Seitenansicht eines ersten Ausführungsbeispiels einer elektrischen Maschine,
- Fig. 2: eine geschnittene Prinzipdarstellung einer Seitenansicht eines zweiten Ausführungsbeispiels einer erfindungsgemäßen elektrischen Maschine, und
- Fig. 3: eine schematische Seitenansicht eines erfindungsgemäßen Kraftfahrzeugs.

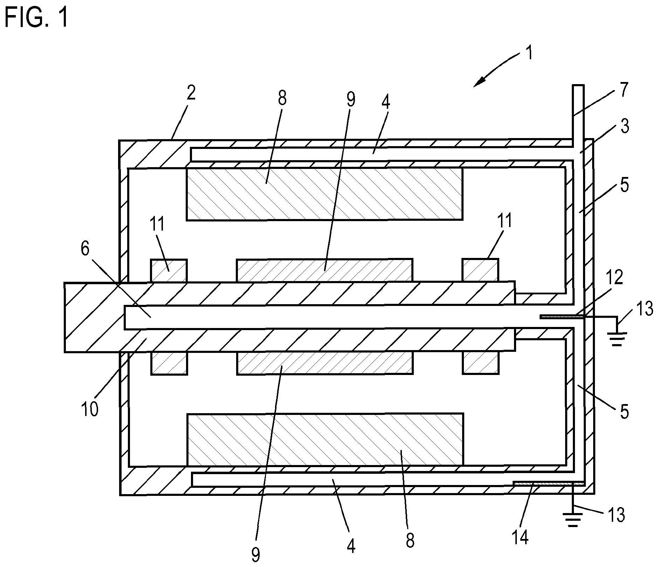

Fig. 1 zeigt eine geschnittene Prinzipdarstellung einer Seitenansicht einer erfindungsgemäßen elektrischen Maschine 1. Die elektrische Maschine 1 umfasst ein Gehäuse 2 sowie ein Kühlsystem 3, welches von dem Gehäuse ausgebildete Kühlkanäle 4, 5 umfasst. Weiterhin umfasst die elektrische Maschine 1 eine Welle 10 mit einem Wellenkühlkanal 6. Die im Mantel des Gehäuses 2 verlaufenden Kühlkanäle 4 sind dabei über die Kühlkanäle 5 mit dem Wellenkühlkanal 6 kommunizierend verbunden. Weiterhin umfasst das Gehäuse 2 einen mit dem Kühlsystem 3 korrespondierenden Anschluss 7, mit dem das Kühlsystem 3 der elektrischen Maschine 1 an einen Kühlkreislauf angeschlossen werden kann. Weiterhin umfasst die elektrische Maschine 1 einen Stator 8, welcher am Gehäuse 2 befestigt ist sowie einen Rotor 9, welcher an der Welle 10 befestigt ist. Die Welle 10 ist durch zwei Wellenlager 11 drehbar gelagert.

Das Kühlsystem 3 sowie der Wellenkühlkanal 6 sind mit einem elektrisch leitfähigem Kühlmittel, beispielsweise einer elektrisch leitfähigen Flüssigkeit oder einem elektrisch leitfähigen Flüssigkeitsgemisch, gefüllt. Über eine in das Innere des Kühlsystems 3 hineinragende und mit dem im Inneren des Kühlsystems 3 befindlichen Kühlmittel in Kontakt stehende Elektrode 12 erfolgt eine Erdung 13 (hier schematisch dargestellt). Die Erdung kann beispielsweise durch den Anschluss der Elektrode 12 an ein Massepotential, beispielsweise an das Gehäuse, erzeugt werden. Über den Kontakt der Welle 10 zu den sich im Wellenkühlkanal 6 befindlichen, elektrisch leitfähigen Kühlmittel wird ebenfalls eine Erdung der Welle 10 erzeugt. Sich im Betrieb der elektrischen Maschine auf der Welle 10 ansammelnde elektrische Ladungen können somit über das elektrisch leitfähige Kühlmittel abfließen, so dass durch angesammelte Ladungen auftretende Störungen sowie ein Abfluss der Ladungen über eines oder beide der Wellenlager 11 vermieden werden können.

Das Kühlsystem 3 kann weitere, hier nicht dargestellte Kühlkanäle und Anschlüsse umfassen, über welche eine Zirkulation des Kühlmittels im Inneren des Kühlsystems 3 bei einem Anschluss an einen Kühlmittelkreislauf ermöglicht wird. Die zusätzlichen Kühlkanäle können dabei insbesondere derart angeordnet sein, dass die im Mantel des Gehäuses angeordneten Kühlkanäle 4 sowie der Wellenkühlkanal 6 gänzlich vom Kühlmittel durchströmt werden.

Zusätzlich oder alternativ zu der Elektrode 12 kann wenigstens ein leitfähiger Wandabschnitt 14 vorgesehen sein, welcher in Kontakt mit dem sich in dem Inneren des Kühlsystems 3 befindlichen Kühlmittel befindet. Auch der wenigstens eine Wandabschnitt kann eine Erdung 13 durch Anschluss an ein externes Massepotential aufweisen, so dass über den leitfähigen Wandabschnitt 14 und den Kontakt zum Kühlmittel auch eine Erdung der Welle 10 ermöglicht wird. Alternativ dazu kann vorgesehen sein, dass die vom Gehäuse 2 gebildeten Kühlkanäle 4, 5 durch ein leitfähiges Gehäuse 2 gebildete, leitfähige Außenwände aufweisen, so dass das im Inneren des Kühlsystems 3 befindliche Kühlmittel über die gesamten Außenflächen der Kühlkanäle 4, 5 elektrisch leitend mit dem Gehäuse 2 verbunden ist. Eine Erdung des elektrisch leitfähigen Kühlmittels bzw. der Welle kann dabei über einen Anschluss des Gehäuses 2 an eine entsprechende Erdung (hier nicht dargestellt) erzeugt werden.

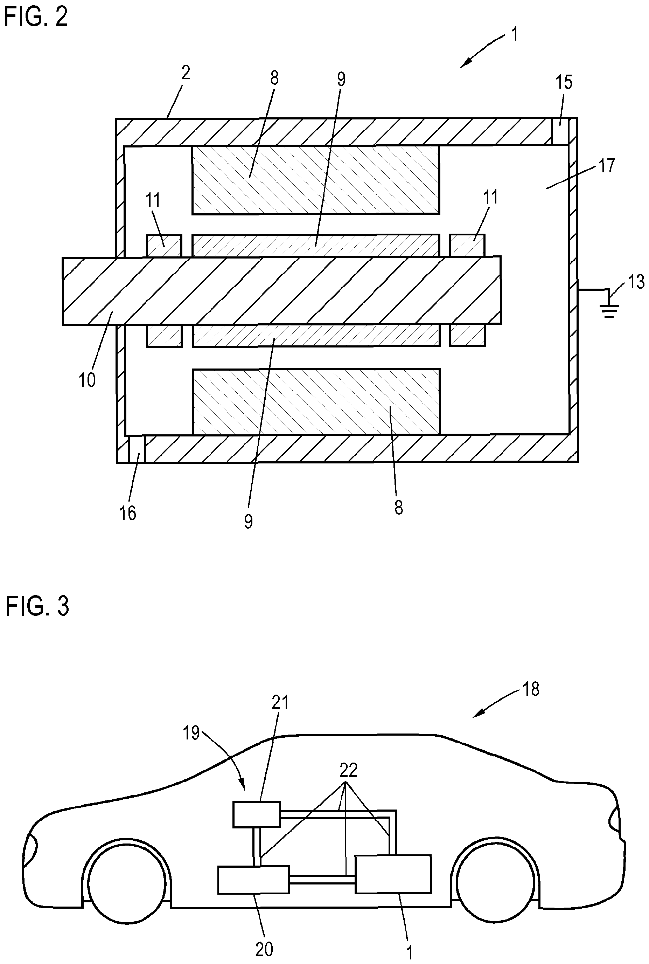

In Fig. 2 ist eine geschnittene Prinzipdarstellung einer Seitenansicht eines weiteren Ausführungsbeispiels einer erfindungsgemäßen elektrischen Maschine 1 gezeigt. Funktionsidentische Komponenten zu der Darstellung in Fig. 1 weisen dieselben Bezugszeichen auf und werden nicht mehr detailliert erläutert. Das Gehäuse 2 der gezeigten elektrischen Maschine 1 besteht in diesem Ausführungsbeispiel aus einem leitfähigen Material und weist einen an der Oberseite des Gehäuses 2 angeordneten Anschluss 15 auf sowie einen an der Unterseite des Gehäuses angeordneten Anschluss 16 auf. Die Anschlüsse 15, 16 korrespondieren mit dem Inneren 17 der elektrischen Maschine 1, so dass bei Zufuhr eines elektrisch leitfähigen Kühlmittels, beispielsweise durch den Anschluss 15, das Innere 17 der elektrischen Maschine 1 von dem Kühlmittel durchströmt wird, wobei das Kühlmittel das Innere 17 anschließend durch den Anschluss 16 wieder verlässt. Dadurch wird eine Kühlung des gesamten Inneren 17 der elektrischen Maschine 1 erreicht. Das Innere 17 stellt in diesem Ausführungsbeispiel einen Kühlkanal eines Kühlsystems der elektrischen Maschine 1 dar. Das elektrisch leitfähige Kühlmittel steht in direktem Kontakt mit dem aus einem elektrisch leitfähigen Material bestehenden Gehäuse 2, wobei das Gehäuse 2 durch einen Anschluss an ein Massepotential eine Erdung 13 aufweist. Eine Erdung der Welle 10 erfolgt dabei durch den direkten Kontakt der Welle 10 zu dem durch das Innere 17 der elektrischen Maschine 1 strömende Kühlmittel. Bei dieser Ausführung ist zu beachten, dass der Rotor 9 und/oder der Stator 8 so beschaffen sein müssen, dass ein Kurzschluss innerhalb von Rotor 9 oder Stator 8 bzw. ein Kurzschluss zwischen Rotor 9 und Stator 8 oder anderen Komponenten der Maschine vermieden wird. Dies kann beispielsweise durch Aufbringung einer geeigneten Isolation auf Rotor und/oder Stator und/oder weitere Komponenten der elektrischen Maschine 1 erreicht werden.

Fig. 3 zeigt eine schematische Seitendarstellung eines erfindungsgemäßen Kraftfahrzeugs 18. Das Kraftfahrzeug 18 umfasst eine elektrische Maschine 1, welche als Traktionsmotor des Kraftfahrzeugs 18 dient. Zusätzlich oder alternativ dazu kann das Kraftfahrzeug 18 auch eine oder mehrere elektrische Maschinen 1 umfassen, welche als Generatoren zur Erzeugung von elektrischer Energie oder als Motoren, beispielsweise als Anlasser oder zur Aktuation von Fahrzeugkomponenten, verwendet werden. Die elektrische Maschine 1 ist an einen Kühlkreislauf 19 des Kraftfahrzeuges 18 angeschlossen. Der Kühlkreislauf 19 umfasst dabei einen Wärmetauscher 20, eine Pumpe 21 sowie mehrere, die elektrische Maschine 1, den Wärmetauscher 20 und die Pumpe 21 miteinander verbindende und zu einem Kreislauf verschaltende Kühlmittelleitungen 22. An den Kühlmittelkreislauf 19 können weitere Komponenten des Kraftfahrzeuges 18 angeschlossen werden, beispielsweise ein Getriebe und/oder ein zusätzlich im Kraftfahrzeug 18 vorhandener Verbrennungsmotor.

## Patentansprüche

1. Elektrische Maschine, mit einer Welle (10) sowie einem Kühlsystem (3), welches wenigstens einen von wenigstens einer Komponente der elektrischen Maschine (1) gebildeten Kühlkanal (4, 5, 17) umfasst, wobei das Kühlsystem (3) mit einem elektrisch leitfähigen, durch das Kühlsystem (3) zirkulierenden Kühlmittel gefüllt ist, wobei die Welle (10) in elektrischem Kontakt zu dem Kühlmittel steht und über das Kühlmittel geerdet ist, wobei die elektrische Maschine (1) ein Gehäuse (2) umfasst, wobei das Gehäuse (2) wenigstens einen mit dem Kühlsystem (3) kommunizierenden Anschluss (7, 15, 16) aufweist, mit dem das Kühlsystem (3) an einen Kühlkreislauf angeschlossen oder anschließbar ist, wobei dem Kühlsystem (3) über den wenigstens einen Anschluss (7, 15, 16) das Kühlmittel durch den Kühlkreislauf zuführbar ist.

2. Elektrische Maschine nach Anspruch 1,
**dadurch gekennzeichnet,**
**dass** das Innere (17) der elektrischen Maschine (1) von dem Kühlmittel durchströmt wird und/oder dass die Welle (10) einen in ihrem Inneren verlaufenden, mit dem Kühlsystem kommunizierenden und mit dem Kühlmittel gefüllten Wellenkühlkanal (6) aufweist.

3. Elektrische Maschine nach Anspruch 1 oder 2,
**dadurch gekennzeichnet,**
**dass** das Kühlmittel in Kontakt mit wenigstens einem leitfähigen Wandabschnitt (14) wenigstens eines Kühlkanales (4, 5, 17) des Kühlsystems (3) steht, wobei der leitfähige Wandabschnitt (14) mit einem Massepotential elektrisch verbunden ist, und/oder dass das Kühlmittel in Kontakt mit wenigstens einer mit einem Massepotential elektrisch verbundenen Elektrode (12) steht.

4. Elektrische Maschine nach einem der vorangehenden Ansprüche,
**dadurch gekennzeichnet,**
**dass** das Kühlmittel eine Flüssigkeit oder ein Flüssigkeitsgemisch ist.

5. Elektrische Maschine nach Anspruch 4,
**dadurch gekennzeichnet,**
**dass** der Flüssigkeit oder dem Flüssigkeitsgemisch wenigstens ein die elektrische Leitfähigkeit erhöhendes Additiv zugesetzt ist.

6. Kraftfahrzeug mit wenigstens einer elektrischen Maschine (1) nach einem der vorangehenden Ansprüche.

## Claims

1. Electric machine, having a shaft (10) as well as a cooling system (3), which comprises at least one cooling channel (4, 5, 17) formed by at least one component of the electric machine (1), wherein the cooling system (3) is filled with an electrically conductive coolant circulating through the cooling system (3), wherein the shaft (10) is in electrical contact with the coolant and is grounded by the coolant, wherein the electric machine (1) comprises a housing (2), wherein the housing (2) has at least one connection (7, 15, 16) communicating with the cooling system (3), by means of which connection the cooling system (3) is connected or can be connected to a cooling circuit, wherein the coolant can be supplied through the cooling circuit to the cooling system (3) via the at least one connection (7, 15, 16).

2. Electric machine according to claim 1,
**characterised in that**
the coolant flows through the interior (17) of the electric machine (1) and/or the shaft (10) has a shaft cooling channel (6) running in its interior, communicating with the cooling system and filled with the coolant.

3. Electric machine according to claim 1 or 2,
**characterised in that**
the coolant is in contact with at least one conductive wall section (14) of at least one cooling channel (4, 5, 17) of the cooling system (3), wherein the conductive wall section (14) is electrically connected to a ground potential, and/or **in that** the coolant is in contact with at least one electrode (12) that is electrically connected to a ground potential.

4. Electric machine according to any of the preceding claims,
**characterised in that**
the coolant is a liquid or a liquid mixture.

5. Electric machine according to claim 4,
**characterised in that**
at least one additive that increases the electrical conductivity is added to the liquid or the liquid mixture.

6. Motor vehicle comprising at least one electric machine (1) according to any of the preceding claims.

## Revendications

1. Machine électrique, avec un arbre (10) ainsi qu'un système de refroidissement (3), lequel comprend au moins un canal de refroidissement (4, 5, 17) constitué d'au moins un composant de la machine électrique (1), dans laquelle le système de refroidissement (3) est rempli avec un agent réfrigérant conducteur de l'électricité circulant à travers le système de refroidissement (3), dans laquelle l'arbre (10) est en contact électrique avec l'agent réfrigérant et est relié à la terre par l'intermédiaire de l'agent réfrigérant, dans laquelle la machine électrique (1) comprend un boîtier (2), dans laquelle le boîtier (2) présente au moins un raccord (7, 15, 16) communiquant avec le système de refroidissement (3), avec lequel le système de refroidissement (3) est raccordé ou raccordable à un circuit de refroidissement, dans laquelle l'agent réfrigérant peut être conduit à travers le circuit de refroidissement dans le système de refroidissement (3) par l'intermédiaire du au moins un raccord (7, 15, 16).

2. Machine électrique selon la revendication 1,
**caractérisée en ce que**
l'intérieur (17) de la machine électrique (1) est traversé par l'agent réfrigérant et/ou **en ce que** l'arbre (10) présente un canal de refroidissement d'arbre (6) passant dans son intérieur, communiquant avec le système de refroidissement et rempli avec l'agent réfrigérant.

3. Machine électrique selon la revendication 1 ou 2,
**caractérisée en ce que**
l'agent réfrigérant est en contact avec au moins une section de paroi conductrice (14) d'au moins un canal de refroidissement (4, 5, 17) du système de refroidissement (3), dans laquelle la section de paroi conductrice (14) est électriquement raccordée à un potentiel de masse, et/ou **en ce que** l'agent réfrigérant est en contact avec au moins une électrode (12) électriquement raccordée à un potentiel de masse.

4. Machine électrique selon l'une quelconque des revendications précédentes,
**caractérisée en ce que**
l'agent réfrigérant est un liquide ou un mélange de liquides.

5. Machine électrique selon la revendication 4,
**caractérisée en ce qu'**
au moins un additif augmentant la conductivité électrique est ajouté au liquide ou au mélange de liquides.

6. Véhicule automobile avec au moins une machine électrique (1) selon l'une quelconque des revendications précédentes.
